# EUROPEAN PATENT APPLICATION

(11) **EP 2 107 483 A1**
(43) Date of publication of application: **07.10.2009**
(21) Application number: 09154554.1
(22) Date of filing: 06.03.2009
(51) Int. Cl.: G06F 21/00, H04L 29/06

(54) **Method and System for Managing Rights Object of Contents**

(30) Priority: 31.03.2008 KR 20080029866
(71) Applicant: Samsung Electronics Co., Ltd., Suwon-si, Gyeonggi-do (KR)
(72) Inventor: Kim, Song Kyoo, Gyeonggi-do (KR)
(74) Representative: Harrison Goddard Foote

(57) **Abstract**

A method and system for managing rights object (RO) of contents is disclosed that can provide a temporary RO for a network-based particular event and can control the expiration of the temporary RO. The method is performed as follows. A master device receives an acceptance message corresponding to an event invitation message from at least one slave device. The master device requests authentication for performing an event, together with the slave device, from a rights issuer (RI). The RI transmits a temporary RO for authenticating the event performance to the slave device. The event is performed by the slave device and the master device, according to the temporary RO. The slave device terminates the temporary RO when the event has been completely performed.

## Description

### BACKGROUND OF THE INVENTION

### 1. Field of the Invention

The present invention relates to digital rights management (DRM). More particularly, this invention relates to a method and apparatus that manages rights object (RO) of network-based DRM contents that can be used by a plurality of users.

### 2. Description of the Related Art

In recent years, the growth of Internet technology and the development of multimedia technology have made it easy to distribute and acquire digital contents. However, if there is no method for protecting the copy rights to these digital contents, the development of such technologies may provide a vehicle for the unlawful distribution of digital contents.

In order to prevent the unlawful reproduction and re-distribution of digital contents, digital rights management (DRM) technology has been developed. This DRM technology relates to system technology that can safely protect and systematically manage the rights to the digital contents. That is, the DRM technology provides a series of protection and management systems to prevent unauthorized copying of digital contents, acquisition of digital contents use rights, digital contents production and distribution, and digital contents use process.

DRM technology allows any user to freely access encrypted digital contents but requires rights object (RO), i.e., a particular license, if they make an attempt to decode and play back the encrypted digital contents. Therefore, if this DRM technology is applied to digital contents, such contents can be effectively protected.

DRM function can be classified into protecting digital contents, managing use rule, and managing billing system. According to DRM technology, digital contents are encrypted to prevent illegal distribution and use so that they can be protected through the whole process from production to distribution, use and disuse. DRM only allows a legal user who has an encryption key, such as an RO, to decode and use the encrypted digital contents. Therefore, although digital contents may be illegally distributed, they cannot be used without an encryption key, and accordingly can be protected.

Rights object (RO) as an encryption key is generated by a rights issuing server, such as a rights issuer (RI), and is sold to users. RO is separated from digital contents and stored in a device, so that, when digital contents are requested to be played back, an RO corresponding to the digital contents can allow or restrict their playback.

RO includes a constraint that refers to information restricting the use of digital contents. The constraint may be stored in a particular field in the RO. For example, when a particular MP3 files is purchased, it can allow for total 10 times play, the constraint of 10 times is set in the RO in a count manner. In this case, each time that the MP3 file is played back, the count is decreased by one. When the 10-th play is performed, the count becomes 'zero' so that the MP3 file can be no longer played.
Therefore, the MP3 file can only be played when RO is additionally purchased.

### SUMMARY OF THE INVENTION

The present invention has been made in view of the above problems, and provides a method and apparatus for managing rights object (RO) of contents that can provide a temporary rights object (Temp_RO) for a particular network-based event and control the expiration of the temporary RO (Temp_RO).

The present invention further provides a method and apparatus for managing rights object (RO) of contents that can issue a temporary RO (Temp_RO) for allowing multiple users to simultaneously perform network-based contents to a particular slave device and can efficiently remove the temporary RO (Temp_RO) issued to the particular slave device when execution of the network-based contents is terminated.

The present invention further provides a method and apparatus for managing rights object (RO) of contents that can provide a temporary RO (Temp_RO) for performing an event to slave devices that join in the event managed by a master device, so that slave devices without the formal RO for the event can be performed and the network-based event can also be performed.

The present invention further provides a method and apparatus for managing rights object (RO) of contents that can efficiently control the count and expiration of the RO as a network-based event of a particular content is performed.

In accordance with an exemplary embodiment of the present invention, the present invention provides a method for managing a rights object (RO) of network-based contents, including: receiving, by a master device, an acceptance message corresponding to an event invitation message from at least one slave device; requesting, by the master device, authentication for performing an event, together with the slave device, from a rights issuer (RI); transmitting a temporary RO for authenticating the event performance from the RI to the slave device; performing the event in the slave device and the master device, according to the temporary RO; and automatically terminating, by the slave device, the temporary RO when the event has been completely performed.

In accordance with another exemplary embodiment of the present invention, the present invention provides a method including: transmitting an event invitation message in response to an event performance request from the master device to at least one slave device; generating, by the master device, a group to perform the event and an event room, according to an acceptance message that is received in response to the event invitation; transmitting a message for requesting the opening of the event room from the master device to the RI; performing, by the master device, an event according to the temporary RO for the event, together with at least one slave device joining the event room; and counting, by the master device, an RO according to the event performance when the event has been completely performed.

In accordance with another exemplary embodiment of the present invention, the present invention provides a method: transmitting an event acceptance message corresponding to the event join request from the slave device to the master device, and waiting, by the slave device, to join the event; receiving, by the slave device, a temporary RO for joining the event and storing it; joining, by the slave device, the event according to the temporary RO, according to the temporary RO, and performing, by the slave device, a corresponding event, together with the master device and at least one of the other devices; and terminating, by the slave device, the temporary RO for the event when the event has been completely performed.

In accordance with another exemplary embodiment of the present invention, the present invention provides a method for managing a rights object (RO) of network-based contents, including: transmitting an event invitation message from a master device to at least one slave device; transmitting, by the slave device, one of an event join acceptance message and an event join rejection message; transmitting a temporary RO form the master device to at least one second slave device that transmits an event acceptance message; joining, by the second slave device, an event of the master device, and performing a corresponding event, according to the temporary RO; and automatically terminating the temporary RO when the event has been completely performed.

In accordance with another exemplary embodiment of the present invention, the present invention provides a method for managing a rights object (RO) of network-based contents, including: transmitting an event invitation message to a group of at least one first slave device which is requested; issuing a temporary RO for joining an event to a group of at least one second slave device, which transmits an acceptance message in response to the invitation message, and opening an event room; checking a group of at least one third slave device that is among the second slave device and joins the event room; performing a corresponding event together with the group of third slave device joining the event room; and controlling the expiration of the temporary RO of the group of third slave device when the event has been completed.

In accordance with another exemplary embodiment of the present invention, the present invention provides a system for managing rights object of contents based on a network, including a master device and at least one second slave device. The master device transmits an event invitation message to at least one slave device and counts an RO according as a temporary rights object (RO) is transmitted to the at least one second slave device that transmits an event acceptance message and according as an event is performed. The at least one second slave device transmits an event acceptance message in response to the event invitation message, joins the event of the master device according to the temporary RO to perform a corresponding event, and terminates the temporary RO when the event has been completely performed.

### BRIEF DESCRIPTION OF THE DRAWINGS

The features and advantages of the present invention will be more apparent from the following detailed description in conjunction with the accompanying drawings, in which:
FIG. 1 shows a signal flow chart describing a method for managing DRM contents between a plurality of users, according to an embodiment of the present invention;
FIG. 2 shows a flow chart describing a method for managing DRM contents by a master device, according to an embodiment of the present invention;
FIG. 3 shows a flow chart describing a method for joining in event by a slave device, according to an embodiment of the present invention;
FIG. 4 shows a flow chart describing a method for managing a temporary rights object by a rights issuer (RI), according to an embodiment of the present invention;
FIG. 5 shows a signal flow chart describing a method for managing DRM contents between a plurality of users, according to another embodiment of the present invention;
FIG. 6 shows a flow chart describing a method for managing DRM contents by a master device, according to another embodiment of the present invention; and
FIG. 7 shows a schematic block diagram illustrating a portable terminal according to an embodiment of the present invention.

### DETAILED DESCRIPTION OF EXEMPLARY EMBODIMENTS

Hereinafter, embodiments of the present invention are described in detail with reference to the accompanying drawings. In the drawings, the same or similar elements are denoted by the same reference numerals even though they are depicted in different drawings. In the following description, a detailed description of known functions and configurations incorporated herein will be omitted when it may make the subject matter of the present invention less clear.

The terms or words described in the present description and the claims should not be limited by a general or lexical meaning, instead should be analyzed as a meaning and a concept through which the inventor defines and describes the present invention, to comply with the idea of the present invention. Therefore, one skilled in the art will understand that the embodiments disclosed in the description and configurations illustrated in the drawings are only preferred embodiments, instead there may be various modifications, alterations, and equivalents thereof to replace the embodiments at the time of filing this application.

The present invention relates to technology that can provide a temporary rights object (Temp_RO) for a particular event, such as server-based network games, ad-hoc network games, etc. The method and apparatus for managing rights object (RO) of contents automatically terminates the temporary RO (Temp_RO) for network-based contents services regardless of a rights issuer (RI), so that the temporary RO (Temp_RO) can be more efficiently managed.

In an embodiment of the present invention, a master device, which has the formal RO for a network-based particular contents service, and a slave device, which does not have the formal RO for the use of the particular contents service, can simultaneously use the particular contents according to the network base.

To this end, the master device, having the formal RO, or the RI issues a temporary RO (Temp_RO), which allows the particular contents service to be used under the predetermined conditions, to at least one slave device that accesses the particular contents service. The at least one slave device and the master device can simultaneously use the particular contents service according to the temporary RO (Temp_RO).

When the at least one slave device terminates the particular contents service, the issued temporary RO (Temp_RO) is automatically removed by a predetermined condition or by the control of the master device.

In the following description, embodiments of the present invention are explained in detail with reference to the accompanying drawings.

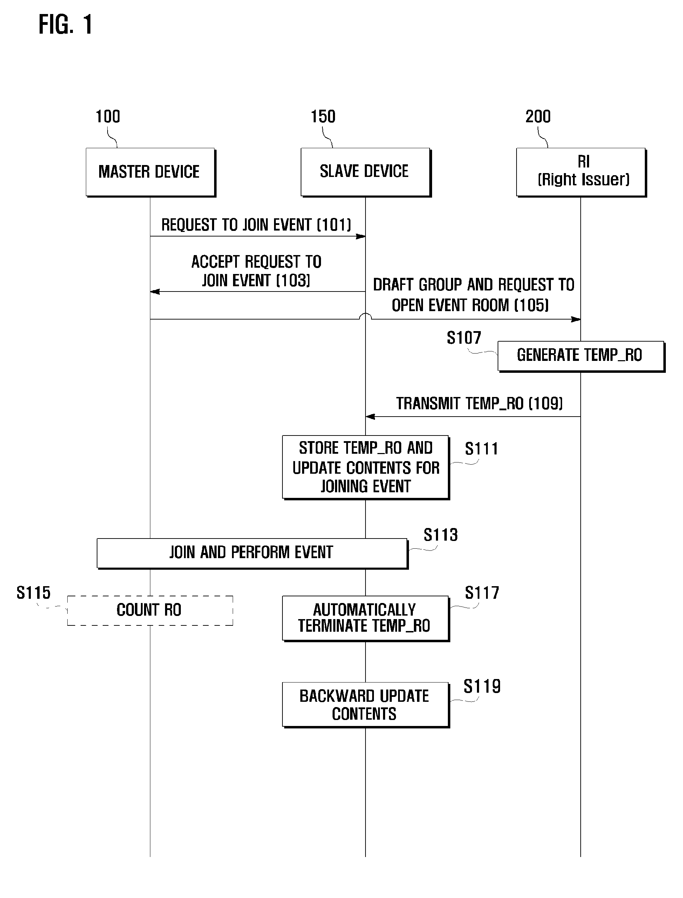

FIG. 1 shows a signal flow chart describing a method for managing DRM contents between a plurality of users, according to an embodiment of the present invention.

Referring to FIG. 1, the master device 100 transmits an event join request message to at least one slave device 150 (S101). The event may be network based network game contents, ad-hoc network game contents, live broadcast contents, etc.

The master device 100 refers to a device that has an RO corresponding to the event and manages the events. That is, the master device 100 is a device that has the decision making rights with respect to the event and has the formal RO.

The slave device 150 refers to a device that can use the event, according to the network base, in response to the event join request of the master device 100. That is, the slave device 150 is a device that uses a corresponding event according to a temporary RO (Temp_RO) issued when it joins a corresponding event. Although the number of slave master device 150 is one as shown in FIG. 1, it should be understood that the embodiment can be implemented to include a plurality of slave devices.

The event join request message can be transmitted through short-range wireless communication. For example, the master device 100 can transmit the event join request message through local connection, such as Bluetooth, Zigbee, etc. If an event, according to an embodiment of the present invention, is intended to be processed by RF communication, it should be understood that the event join request message can be also transmitted through RF communication.

The event join request message may include device information for identifying the master device 100 and contents information for identifying a corresponding event. The device information may use a device identifier such as international mobile equipment identity (IMEI). The contents information may use contents identifier (CID) allocated to contents.

The slave device 150 transmits an event join acceptance message to the master device 100 in response to the event join request of the master device 100 (S103). The event join acceptance message may be transmitted through local connection. If an event, according to an embodiment of the present invention, is intended to be processed by RF communication, it should be understood that the event join acceptance message can be also transmitted through RF communication.

The event join acceptance message may include device information for identifying the slave device 150 and information for accepting the request to join a corresponding event. The device information may use a device identifier of the slave device.

Although the embodiment is implemented in such a way that the slave device 150 transmits the event join acceptance message to the master device in FIG. 1, it should be understood that the slave device 150 can transmit an event join rejection message in response to the event join request. In this case, the event join rejection message may include device information for identifying the slave device 150 and information for rejecting the request to join a corresponding event.

The master device 100 can prepare a group of joiners (slave devices) that join the event, according to the event join acceptance message transmitted from at least one slave device, and requests to open an event room for the event from the RI 200 (S105). The event room refers to a cyber space, such as a cyber game space on a network, a personal broadcast space, etc., where a plurality of users can simultaneously access a corresponding space, with respect to a particular content, and use corresponding services.

The event room open request of the master device can be transmitted by using a message that requests to open an event. The event open request message may include elements as described in following Table 1.

**[Table 1]**

| | | | | | |
|---|---|---|---|---|---|
| Type | CID | MasterDevicelD | SlaveDevicelD 1 | ... | SlaveDevicelD N |

As described in Table 1, the Type shows information indicating a type of request message. This information indicates a type of message to request to open a particular event and to accordingly request a temporary RO (Temp_RO) in response to the event open request. The CID shows contents information corresponding to the event. The MasterDevicelD shows information that identifies a device transmitting the request message, i.e., the master device 100. The SlaveDevicelD shows information that identifies the master device 100 and the slave device 150 intended to perform an event. Information for identifying the master device 100 and the slave device 150 may be indicated by a device identifier (Device ID). If the number of slave devices joining an event is numerous, the SlaveDevicelD includes one or more SlaveDevicelDs corresponding to respective slave devices.

The RI 200 refers to a sever that manages a license for DRM contents. The license refers to a right to permit the use right to certain contents. The license includes a key for decoding corresponding contents and information for restricting the use of the corresponding contents. Therefore, only after receiving license from the RI 200, the devices, such as the master device 100 and the slave device 150, can play back corresponding DRM contents.

In particular, the RI 200 provides the formal RO as described above. In addition, the RI 200 generates a temporary RO (Temp_RO) that allows for the limited use of particular contents in response to the request of the master device 100 and provides the generated temporary RO (Temp_RO) to the slave device 150.

When the RI 200 is requested to open the event room by the master device 100, it generates a temporary RO (Temp_RO) (S107). The RI 200 checks whether the master device 100 is an approved device. If the RI 200 ascertains that the master device 100 is an approved device, it can generate a temporary RO (Temp_RO) corresponding to contents information transmitted from the master device 100, as described in Table 1. When the RI 200 generates the temporary RO (Temp_RO), it can also determine the number of temporary RO (Temp_RO) to be generated, referring to group information described in Table 1.

The RI 200 can determine whether the master device 100 and RO are effective, through the authentication process, with respect to a particular authentication server, the master device 100, and the RO requesting contents. The authentication may be performed by the use of online certificate status protocol (OCSP).

The RI 200 transmits the generated temporary RO (Temp_RO) to the slave device 150 corresponding to the group information (S109). The temporary RO (Temp_RO) can be transmitted through a particular trigger message of the RI 200. The particular trigger message may use a rights object acquisition protocol (ROAP) trigger message. The trigger message includes elements as described in following Table 2.

**[Table 2]**

| | | |
|---|---|---|
| Type | CID | Temp_RO |

As described in Table 2, the Type shows information that indicates a type of trigger message. That is, the Type includes information regarding the issuance of a temporary RO (Temp_RO) to join a particular event. The CID shows information corresponding to the event. The CID indicates contents information. The Temp_RO shows a RO that can temporarily use the event under the predetermined condition.

The slave device 150 acquires a temporary RO (Temp_RO) through the trigger message transmitted from the RI 200 and then stores it (S111). The slave device 150 may further update contents to join the event.

When a temporary RO (Temp_RO) is allocated to the slave device 150 by the RI 200, the slave device 150 joins an event by the master device 100 through an event room on the network and then performs a corresponding event, together with the master device 100 (S113).

The representative example of the above process is a network game or a live broadcast, etc. That is, if the master device 100 opens an event room using the network game contents, the slave device 150 can join the network game, opened by the master device 100, through the temporary RO (Temp_RO). If the master device 100 provides an event by the use of live broadcasting contents, the slave device 150 can join the live broadcasting, managed by the master device 100, through the temporary RO (Temp_RO).

After the event has been completely performed, the master device 100 counts RO according to the performance of the event (S115). For example, if a method for terminating an RO of the event employs a count method, the performing number of the event is reduced by one. If a method for terminating RO of the event employs a time method, the time period that the event can be performed is reduced according to the event performance time.

Although the present embodiment is implemented in such a way that RO is counted after the event is performed as shown in FIG. 1, it should be understood that this embodiment does not limit the present invention.

When a user requests the performance of an event, the master device 100 determines whether the user has a right to request the performance of the event. According to the determination, a proper operation is performed. More specifically, when the master device 100 is requested to perform an event, it checks whether there is a right to perform the event.

Determination as to whether there is a right to perform the event may be performed in such a way to check the RO with respect to a corresponding event. If there is a right to perform the event, the RO is counted and then the procedure proceeds with S101.

On the contrary, if there is not a right to perform the event, a corresponding operation according to a setting method is performed. For example, a process for acquiring RO for the event may be performed according to a user's request, etc. That is, an RO of a corresponding event may be acquired by connecting to the RI 200.

When the event has been completed, the slave device 150 automatically terminates (or removes) the stored temporary RO (Temp_RO) allocated to join the event (S117). After that, the slave device 150 may further backward update a corresponding content according to the event performance (S119). For example, the changed contents information can be updated according to the event performance. The contents information may be game rank, contents version information, brief information about event joiners, live broadcasting information, brief information about live broadcasting joiner, etc.

Although it is not shown in FIG. 1, it should be understood that the master device 100 designates a particular slave device according to a user's request and transmits an event invitation message to the designated slave device.

When a slave device receiving a temporary RO (Temp_RO) does not join a corresponding event, it may automatically terminate the temporary RO (Temp_RO) according to a setting condition. For example, if the setting condition is a time count and the temporary RO (Temp_RO) is not used for a predetermined period of time, the temporary RO (Temp_RO) can expire.

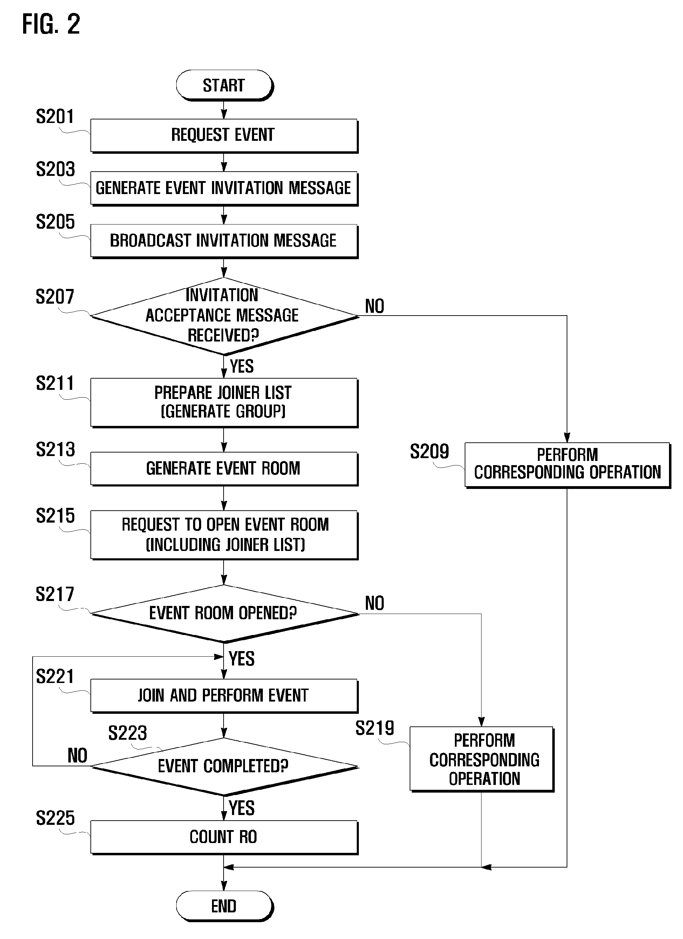

FIG. 2 shows a flow chart describing a method for managing DRM contents by a master device, according to an embodiment of the present invention. In particular, FIG. 2 shows the control operation of the master device 100 in FIG. 1.

Referring to FIG. 2, when the master device is requested to perform an event by a user (S201), it generates an event invitation message to invite to the event (S203). The master device may check whether there is a right to perform the event. The event invitation message may include contents information according to the event, information about the master device, invitation information, etc.

After that, the master device broadcasts the event invitation message (S205). If the master device performs an event according to short-range wireless communication, such as Bluetooth, Zigbee, etc., the event invitation message may be transmitted to at least one slave device through short-range wireless communication, where the slave device is in the vicinity of the master device and employs short-range communication.

If the master device allows for local connection, such as a wireless local area network (WLAN), it can broadcast to a plurality of other slave devices through the Internet. The event invitation message can be transmitted to a web server, etc., through the Internet, so that the web server can broadcast the event invitation message.

Although it is not shown in FIG. 2, it should be understood that the master slave designates a particular slave device and transmits the event invitation message to it. In this case, the event invitation message can be transmitted to particular slave devices designated by a user through short-range wireless communication, RF communication, Internet communication, etc.

After that, the master device checks whether to receive an acceptance message replying to the invitation in response to the event invitation broadcasting (S207). If the master device does not receive an invitation acceptance message at S207, it performs a corresponding operation (S209). For example, the master device enters a standby state to receive an invitation acceptance message for a predetermined period of time or terminates the event performance after the predetermined period of time has elapsed.

On the contrary, if the master device receives an event acceptance message at S207, it prepares a list of joiners joining the event according to the received acceptance message (S211). That is, the master device collects the acceptance messages and generates a group of at least one slave device in preparation to perform the event. The master device can continue to receive acceptance messages during the preset period of time. In this case, it can receive a plurality of acceptance messages from a plurality of other slave devices. While the master device is receiving the acceptance messages during the preset period of time, such a receiving can be stopped by a user's request.

After that, the master device generates an event room that is a space for the joiners and the event performance (S213) and transmits a message requesting the opening of the event room to the RI (S215). The message requesting the opening of the event room, as described in Table 1, includes at least one pieces of information, such as, information about the master device, contents information, joiner list or group, etc.

After that, the master device determines whether permission is granted to open the event room (S217). This determination may be performed in such a way that a temporary RO (Temp_RO), generated when the RI allows to open an event room, is transmitted to the other slave devices joining the event and thus the other slave devices are connected to the event room.

If the master device ascertains that permission is not granted to open the event room at S217, it performs a corresponding operation (S219). For example, the master device re-requests the opening of an event room for a preset frequency. Also, the master device performs an RO updating or an RO purchase procedure when it receives a request to update or purchase RO, required to open the event room, from the RI.

On the contrary, if the master device ascertains that permission is granted to open the event room at S217, it joins the event and performs a corresponding event with the other joiners (slave devices) (S221).

Next, the master device determines whether the event being performed has been completed (S223). If the event has been completed at S223, the master device counts RO according to the event performance (S225). On the contrary, if the event has not been completed at S223, the master device returns to and proceeds with S221.

Although the present embodiment, as shown in FIG. 2, is implemented in such a way that counting RO is performed after the event has been completed, it should be understood that the process of counting RO may be performed at the time point when the event is requested or when opening an event room is permitted.

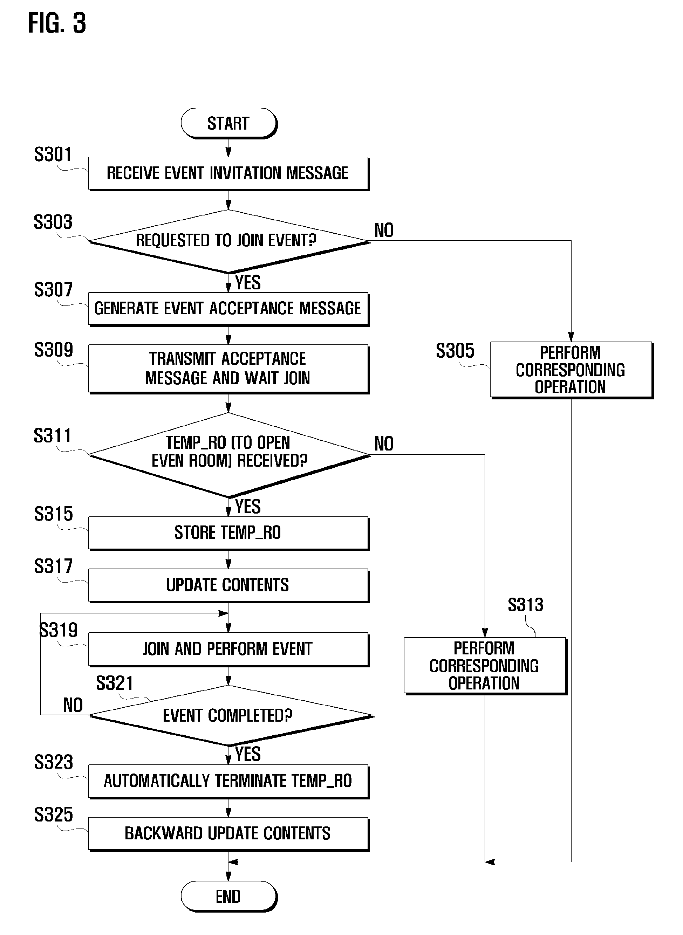

FIG. 3 shows a flow chart describing a method for joining with event in a slave device, according to an embodiment of the present invention.

Referring to FIG. 3, when a slave device receives an event invitation messages from other devices (for example, a master device) (S301), it determines whether an event join is requested from a user, in response to the event invitation message (S303).

If an event join is not requested at S303, the slave device performs a corresponding operation (S305). For example, the slave device generates an event join rejection message according to a setting method and transmits it. The slave device also ignores the event invitation message and performs an operation according to a user's request or a standby operation.

On the contrary, if an event join is requested at S303, the slave device generates an event acceptance message (S307). After that, the slave device transmits the generated event acceptance message to the particular other device (master device) and then waits to join the event (S309). The acceptance message can be transmitted according to information about the particular other device (master device) included in the invitation message.

Next, the slave device determines whether an event room is opened (S311), i.e., whether the slave device does not receive a temporary RO (Temp_RO) from the RI. The time point to detect whether the event room is opened may be a time point that the slave device receives a temporary RO (Temp_RO) from the RI. That is, although the slave device does not have RO for the event or has the formal RO for the event, the formal RO according to the event performance is not counted. Therefore, in an embodiment of the present invention, when the slave device receives a temporary RO (Temp_RO), required to perform the event, from the RI, it can join the event, i.e., the event room is opened.

After that, if the event room is not opened at S311, i.e., the slave device does not receive a temporary RO (Temp_RO) from the RI, the slave device performs a corresponding operation (S313). For example, the slave device stands by for a certain period of time and then terminates to join the event. The slave device also enforcedly terminates to join the event, according to a user's request.

On the contrary, if the slave device receives a temporary RO (Temp_RO) from the RI, it stores the received temporary RO (Temp_RO) (S315).

After that, the slave device further updates a corresponding content to join the event (S317). The slave device may join the event and performs a corresponding event together with the other joiners (S319).

Next, the slave device determines whether the event being performed has been completed (S321). If the event has been completed at S321, the slave device automatically terminates the temporary RO (Temp_RO) that is allocated from the RI in order to join the event (S323). On the contrary, if the event has not been completed at S321, the slave device returns to and proceeds with S319.

In an embodiment of the present invention, although the temporary RO (Temp_RO) automatically expires in response to the event completion, it should be understood that the temporary RO (Temp_RO) may expire by terminating to join the event according to a user's request.

If the event is terminated in the slave device by a particular error, etc., such as communication problems, while the slave device is joining the event, it is preferable that the slave device may re-join the event within a predetermined period of time. That is, when the event is terminated by errors, etc., it is preferable that the slave device keeps the temporary RO (Temp_RO) for a predetermined period of time and re-joins the event within the predetermined period of time. If the slave device does not join the event within a predetermined period of time, the temporary RO (Temp_RO) automatically expires.

After that, the slave device further backward updates a corresponding content according to the event performance (S325).

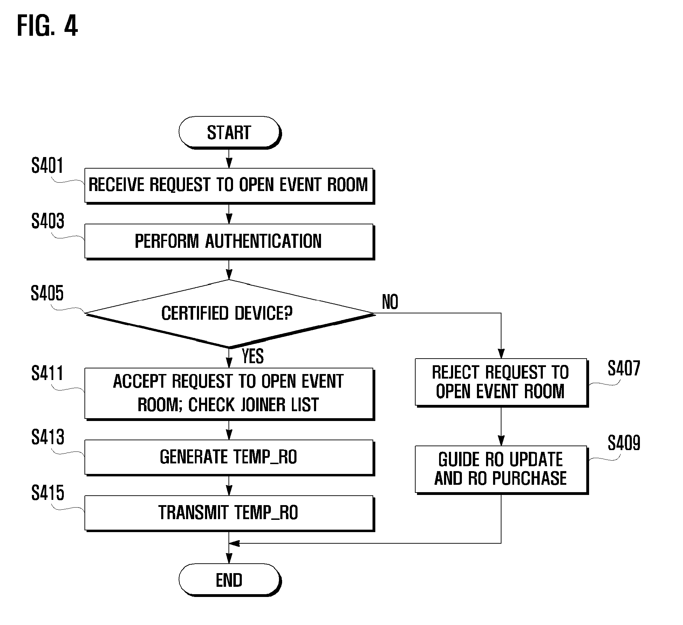

FIG. 4 shows a flow chart describing a method for managing a temporary rights object (Temp_RO) in a rights issuer (RI), according to an embodiment of the present invention.

Referring to FIG. 4, when the RI receives an event room open request message from a particular device (for example, a master device 100) (S401), it authenticates the master device (S403). That is, the RI determines whether the master device requesting the opening of the event room has a formal RO for performing the event.

After that, the RI determines whether the master device is a certified device (S405). If the master device is not an authenticated device at S405, the RI rejects the opening of an event room of the master device (S407). The RI generates a guiding message, such as updating or purchasing an RO allowing for the opening of the event room, etc., and then transmits it to the master device (S409).

On the contrary, if the master device is an authenticated device at S405, the RI accepts the request to open an event room of the master device and checks a list of joiners included in the event room open request message (S411). After that, the RI generates a temporary RO (Temp_RO) allocated to each joiner device (for example, slave device 150), according to the joiner list, (S413). The RI transmits the generated temporary RO (Temp_RO) to each slave device (S415).

In the foregoing description, the method for managing DRM contents is explained, associating with the master device, the slave device, and the RI. More specifically, with respect to a particular event, when a master device (decision maker) having a licence performs a particular event, together with at least one slave device, the RI provides a temporary RO (Temp_RO) for the particular event and, when a corresponding event is terminated, each slave device automatically terminates the temporary RO (Temp_RO) of a licence for the particular event.

A corresponding temporary RO (Temp_RO) also expires as the slave device changes an offset value for a particular event when a particular event has been completed. For example, the value of <Event_offset> is changed from '1' (On/Active) to '0' (Off/Inactive).

As another example, when a particular event has been completed, the master device transmits a control signal to change an offset value for the particular event to each slave device joining the event and each slave device changes the offset value according to the received control signal, thereby terminating a corresponding RO.

After the process described above has been completed, the use of a corresponding content is limited in each slave device in order to perform a particular event.

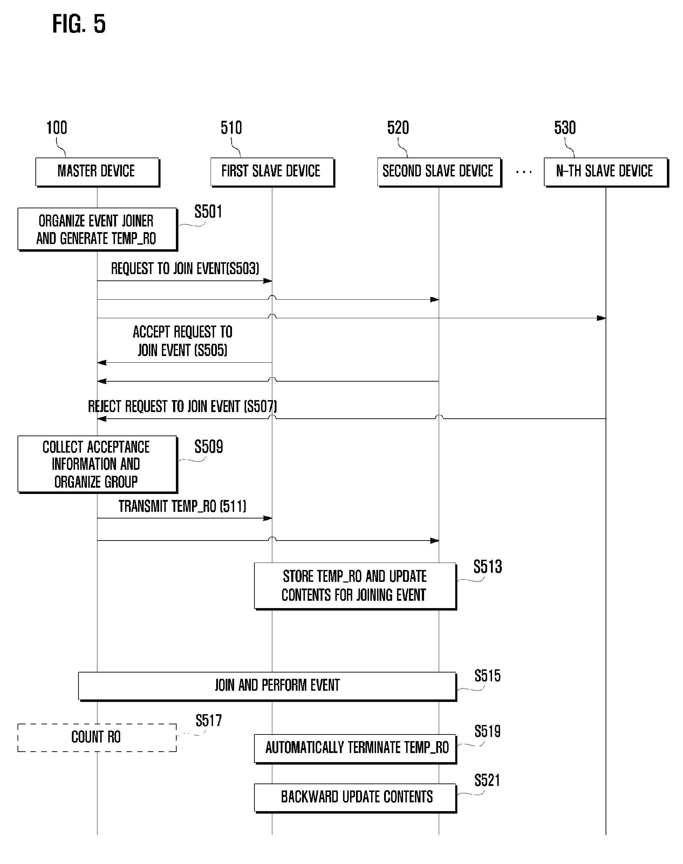

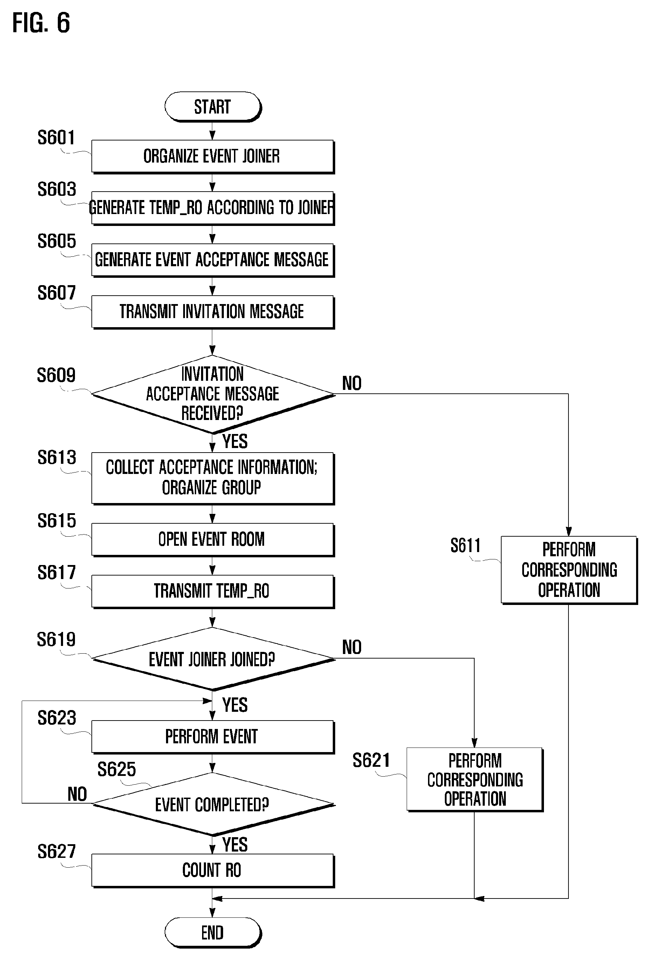

In the following description, referring to FIG. 5 and FIG. 6, operations are explained where a master device having a license right with respect to a particular event selects users (slave devices) to join the event, generates a temporary RO (Temp_RO), as a temporary license, for corresponding users, and provides it to the users. The users permitted to join the event may be designated in the master device. The users may also invite the other users according to an invitation message as described above.

In the following description referring to FIG. 5 and FIG. 6, the embodiments of the present invention are implemented in such a way that the slave device automatically terminates a temporary RO (Temp_RO) when an event has been completed. However, it should be understood that the master device can also control the expiration of the temporary RO (Temp_RO). For example, the master device transmits a particular control signal for commanding the expiration of a temporary RO (Temp_RO), when the event has been completed, to respective slave devices joining the event and the respective slave devices can terminate the temporary RO (Temp_RO) according the event performance.

FIG. 5 shows a signal flow chart describing a method for managing DRM contents between a plurality of users, according to another embodiment of the present invention.

As shown in FIG. 5, a master device 100 refers to a device that has a license right for particular network-based contents, i.e., a formal RO, which is achieved without additional network communication with a rights issuer (RI). The master device 100 can generate a temporary RO (Temp_RO) for network-based contents, with respect to at least one slave device, and provides it to the at least one slave device. To this end, the master device can previously acquire an additional license, related to the generation and provision of the temporary RO (Temp_RO), from the RI.

Referring to FIG. 5, the master device 100 designates at least one slave device (first slave device 510, second slave device 520, and N-th slave device 530) to be requested to join an event according to a user's request and generates a temporary RO (Temp_RO), as a license, which allows the first to N-th slave devices 510 to 530 to join the event (S501). The event may be network game contents, ad-hoc network game contents, live broadcast contents, etc., which are based on a network.

The master device 100 refers to a device that has an RO corresponding to the event, manages the event, and generates a temporary RO (Temp_RO) according to the event. That is, the master device 100 is a device that has a decision making right with respect to the event and has the formal RO.

The slave devices 510∼530 refer to a device that does not have the formal RO corresponding to the event or, although it has the formal RO corresponding to the event, does not count the RO according to the event. The slave devices 510∼530 also refers to a device that can use the event, based on the network, in response to the event join request of the master device 100. That is, the slave devices 510∼530 refer to devices that join a corresponding event and use a related event.

Next, the master device 100 transmits an event join request message to the first to N-th slave devices 510∼530 designated by a user (S503). The first to N-th slave devices 510∼530 each transmit an event join acceptance message or an event join rejection message, according to a corresponding user's request, (S505, S507). FIG. 5 shows an example where the first and second slave devices 510 and 520 transmit event join acceptance messages to the master device 100 and the N-th slave device 530 transmit an event join rejection message to the master device 100.

Although the present embodiment of FIG. 5 is implemented in such a way that the N-th slave device 530 transmits an event join rejection message to the master device 100, it may be modified in such way to omit transmission of the event join rejection message, according to a user's request. Therefore, the master device 100 considers a slave device to reject the event join if the slave device transmits the event join rejection message to the master device 100 or does not transmit any response message to the master device 100.

After that, the master device 100 collects event acceptance information from the first to N-th slave devices 510∼530 and organizes an event join group (S509). In an embodiment of the present invention shown in FIG. 6, the event join group can be organized using the first and second slave devices 510 and 520 that transmit the event join acceptance messages to the master device 100.

Next, the master device 100 transmits the generated temporary RO (Temp_RO) to the first and second slave devices 510 and 520 organized as a group, respectively (S511). The first and second slave devices 510 and 520 receive the temporary RO (Temp_RO) from the master device 100 and store them (S513). The first and second slave devices 510 and 520 may further update contents to join the event.

When the temporary RO (Temp_RO) is allocated to the first and second slave devices 510 and 520 by the master device 100, the master device 100 and the first and second slave devices 510 and 520 simultaneously join an event, managed by the master device 100, through an event room on the network, and then perform the event (S515). Therefore, although it is omitted in FIG. 5, the master device 100 can perform a process of opening an event room that can perform an event managed by the master device 100. A representative example of the event room may be game rooms for network-based games, broadcasting rooms for live broadcasting, etc.

After the event has been completed, the master device 100 counts RO according as the event is performed (S517). For example, in order to terminate an RO of the event, the master device 100 can decrease the number of events to possibly be performed or reduce the time period that the event can be performed. Although an embodiment of the present invention shown in FIG. 5 is implemented in such a way that counting RO is performed after the event has been performed, it should be understood that it is not necessary to perform the process of counting RO after the event performance.

Therefore, the master device 100 may count the RO at a time point that a temporary RO (Temp_RO) is generated or that the event is performed.

When the event has been completely performed, the first and second slave devices 510 and 520 automatically terminate (remove) the stored temporary RO (Temp_RO) allocated to themselves in order to join the event (S519). Although the embodiment of the present invention shown in FIG. 5 is implemented in such a way that, after the event has been completely performed, the respective slave devices 510 and 520 terminate the temporary RO (Temp_RO), it should be understood that the present invention is not limited to the embodiment.

Therefore, after the event has been completed, the master device 100 can transmit a control signal for terminating the temporary RO (Temp_RO) to the respective slave devices 510 and 520 that join the event. In this case, the respective slave devices 510 and 520 can terminate the temporary RO (Temp_RO) according to the event performance, based on the control signal.

Next, the first and second slave devices 510 and 520 may further backward update corresponding contents according to the event performance (S521). For example, they can update contents information changed according to the event performance. The contents information may be game rank, content version information, brief information about event joiners, live broadcasting information, brief information about live broadcasting joiners, etc.

The embodiment of the present invention shown in FIG. 5 is implemented to generate a temporary RO (Temp_RO) at S501. However, it may be modified in such a way to generate a temporary RO (Temp_RO) in response to the number of slave devices to join an event after the slave devices responding to the event join request message are organized as groups.

FIG. 6 shows a flow chart describing a method for managing DRM contents in a master device, according to another embodiment of the present invention. In particular, FIG. 6 shows the control operation of the master device 100 in FIG. 5.

Referring to FIG. 6, the master device receives information about joiners for performing an event from a user and then organizes it (S601). After that, the master device generates a temporary RO (Temp_RO) (S603) and an event invitation message (S605), according to the information about joiners. The master device may further perform a process of opening an event room for performing the event. The invitation message may include content information according to an event, information about a master device, invitation information, etc.

After that, the master device transmits the generated invitation message to the respective slave devices according to the information about joiners (S607). The master device transmits the invitation message to corresponding slave devices designated by a user, through short-range communication such as Bluetooth, Zigbee, etc., through the Internet, through a mobile communication network, or through a combination of the communication methods described above.

After that, the master device checks whether to receive an invitation acceptance message in response to the invitation message (S609). If the master device does not receive an invitation message from any one of the slave devices designated by a user at S609, it performs a corresponding operation (S611). For example, the master device waits for an acceptance message for a preset period of time, re-transmits the invitation message if an acceptance message is not received when a preset period of time has elapsed, or terminates an event performance, etc.

On the contrary, if the master device receives an invitation message from at least one of the slave devices designated by a user at S609, it collects at least one received acceptance message and organizes it as group (S613). The master device continues to receive the acceptance message for a predetermined period of time. In this case, the master device receives a plurality of acceptance messages from a plurality of slave devices. During the process of receiving the acceptance messages, the receipt of accepting messages can be stopped according to a user's request. For example, if a user concluded that enough joiners are present to perform an event and thus joiners are no longer needed, the master device stops receiving the acceptance message and inputs a command for performing an event.

After that, the master device opens an event room when a group for performing an event is organized (S615). The event room can be opened according as a preset condition (for example, the minimum number of joiner, etc.) is satisfied or according to a user's event room open command. The master device transmits a temporary RO (Temp_RO) to slave devices, respectively, which have transmitted the acceptance message, according to the event room opening process (S617).

Next, the master device checks whether an event joiner joins the open event room (S619). If the master device ascertains that there is no event joiner joining the open even room at S619, it performs a corresponding operation (S621). For example, the master device transmits a message to request joining an event room to respective slave devices or cancels the opening of an event room if there is no event joiner when a preset period of time has elapsed. On the contrary, if the master device ascertains that event joiners join the open event room at S619, it performs a corresponding event together with the event joiners joining the event (S623).

After that, the master device determines whether the event being performed has been completed (S625). If the master device ascertains that the event has been completed at S625, it counts RO according to the event performance (S627). Counting RO, as shown in FIG. 5, is performed after the event has been completed. It should be understood that counting RO may be performed at a time point when the event is requested or at a time point when the event room is opened. On the contrary, if the master device ascertains that the event has not been completed at S625, it returns to and proceeds with S623.

Although it is not shown in FIG. 6, if, based on the check result whether the event joiner joins an event, there is a slave device that does not join an event, which is one from among the slave devices transmitting a temporary RO (Temp_RO), the master device may generate a control signal for terminating a temporary RO (Temp_RO), which is transmitted to corresponding slave devices. Therefore, if a slave device receiving a temporary RO (Temp_RO) does not join a corresponding event, the received temporary RO (Temp_RO) expires according to the control signal.

In another embodiment of the present invention, if a slave device that does not join an event acquires a temporary RO (Temp_RO) but does not perform a corresponding event, the temporary RO (Temp_RO) automatically expires. Therefore, these operations prevent the unauthorized acquisition of RO and protect contents copyright.

Although an embodiment of the present invention of FIG. 6 is implemented in such a way that the master device transmits an invitation message to particular slave devices designated by a user, it should be understood that the embodiment does not restrict the present invention. For example, the embodiment may be modified in such a way that the master device, as shown in FIG. 1 and FIG. 2, can broadcast an invitation message to any other slave devices and then the method of FIG. 6 can be performed with respect to the slave devices that received an invitation acceptance message.

In the foregoing description, embodiments of the method for granting RO for DRM contents have been explained. However, it should be understood that the present invention is not limited to the embodiments. It will be appreciated that there are many modifications from the embodiments.

In the following description, a portable terminal adapted to the method described above is explained.

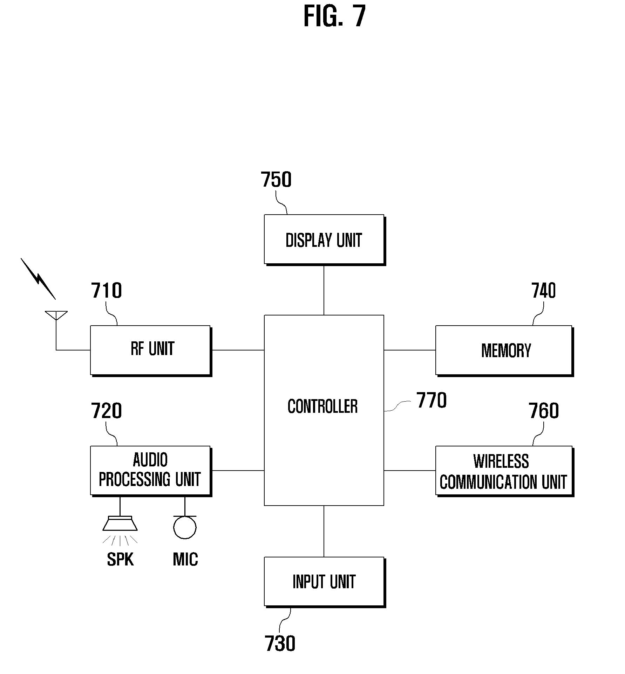

FIG. 7 shows a schematic block diagram illustrating a portable terminal according to an embodiment of the present invention. In particular, the portable terminal can be operated as both the master device and the slave device.

It will be easily appreciated that the portable terminal according to the present invention can be applied to all the information communication devices, multimedia devices, and their applications, such as all types of mobile communication terminals operable through communication protocols applied to a variety of communication systems, a portable multimedia player (PMP) that can access particular server (contents server, rights issuer (RI), etc.) through wired/wireless Internet, etc., an MP3 player, a digital broadcast receiver, a personal digital assistant (PDA), a smart phone, a mobile phone, a laptop computer, etc.

As shown in FIG. 7, the portable terminal includes a radio frequency (RF) unit 710, an audio processing unit 720, an input unit 730, a memory 740, a display unit 750, a wireless communication unit 760 and a controller 770.

The RF unit 710 allows the portable terminal to communicate with external devices. It establishes a communication channel with a mobile communication system, so that the portable terminal can perform voice communication and data communication with external devices. In particular, the RF unit 710 transmits and receives contents and messages for acquiring RO related to the contents to and from external devices, associated with an external server. The RF 710 is configured to include an RF transmitter for up-converting the frequency of transmitted signals and amplifying the transmitted signals and an RF receiver for low-noise amplifying of received RF signals and down-converting the frequency of the received RF signals. In particular, the RF unit 710 performs communication for transmitting and receiving an invitation message according to the event performance, an invitation acceptance message, a temporary RO (Temp_RO), a control signal, etc.

The audio processing unit 720 plays audio signals back or outputs audio signals from a microphone MIC to the controller 770. That is, it converts audio signals into audible sound signals and outputs audible sounds through a speaker SPK. It also creates data from audio signals, such as voice signals, etc., received by the microphone MIC and then outputs the data. In particular, the audio processing unit 720 inputs or outputs audio signal components, which are related to the event performance, according to a user's selection.

The input unit 730 receives a variety of character information. It also receives key signals, related to setting of a variety of functions and controlling portable terminal functions (for example, event performance) and outputs them to the controller 770. According to the type of portable terminal, the input unit 730 may be implemented with a touch pad, a key pad having a general key array, or a key pad with a QWERTY key array, which includes at least one function key that is set to perform a particular function (for example, an event performance).

The memory 740 stores at least one application, required to operate the functions according to an embodiment of the present invention, and data that are generated by a user or received from an external system (for example, a contents server, an RI, the other portable terminals, etc.). The data may be contents required to perform an event, a formal RO, a temporary RO, an invitation message, an acceptance message, terminal information, and a control signal. The data may also be user data (picture file, MP3 file, moving image file, document file, etc.) that are generally used in a portable terminal. The application may be a contents manager that manages and controls DRM contents (event).

The memory 740 includes one or more buffers that temporarily store data generated while the application is executed. It may be included within the portable terminal. It may also be installed to the outside part together with a smart card, etc. It should be understood that the memory 740 may be implemented with all the storing media regardless their internal/external types.

The display unit 750 displays screen data, generated while the application is executed, and user's key operating state, function setting information, etc. The display unit 750 is implemented by a liquid crystal display (LCD). If the LCD is implemented as a touch screen, the display unit 750 may be included in an input means. In particular, the display unit 750 can display screen data according to the event performance.

If the portable terminal according to the present invention supports short-range wireless communication such as Bluetooth or Zigbee, etc., the wireless communication unit 760 allows the portable terminal to perform short-range wireless communication with the other portable terminals according to the control of the controller 770. In particular, the wireless communication unit 760 can perform communication related to an event performance using short-range wireless communication. That is, the wireless communication unit 760 transmits and receives an invitation message, an acceptance message, a temporary RO, etc. through short-range wireless communication. If the portable terminal supports communication using a wireless LAN and the Internet, the wireless communication unit 760 can perform wireless communication with the other portable terminal, through the Internet, according to the control of the controller 770. In particular, the wireless communication unit 760 can perform communication related to an event performance using the Internet. That is, the wireless communication unit 760 transmits and receives an invitation message, an acceptance message, a temporary RO, etc., through the Internet. If the portable terminal can simultaneously support short-range wireless communication and Internet communication through a wireless LAN, the wireless communication unit 760 can be individually configured to perform corresponding communications.

The controller 770 controls the entire operation of the portable terminal. It also controls signal flows between blocks in the portable terminal, which are the RF unit 710, the audio processing unit 720, the input unit 730, the memory 740, the display unit 750, and the wireless communication unit 760. It may also include a data processing unit that is configured to include a CODEC and a MODEM.

In particular, the controller 770 controls a series of processes related to the event performance.

When the portable terminal serves as a master device, the controller 770 performs the following controlling operations, such as generating an invitation message, a temporary RO, and a control signal for terminating the generated temporary RO, opening an event room, managing an event joiner group, performing an event, managing a formal RO, and counting the RO according to the event performance.

On the other hand, when the portable terminal serves as a slave device, the controller 770 performs the following controlling operations, such as generating an acceptance message, terminating a temporary RO, and joining an event. These operations of the controller 770 were explained in the description with reference to FIG. 1 to FIG. 3, FIG. 5, and FIG. 6.

Although the embodiment of the portable terminal according to the present invention is schematically shown in FIG. 7, it should be understood that the present invention is not limited to the embodiment. For example, the portable terminal may further include a camera module, an electronic payment module, a digital broadcasting module, a battery module, etc. It will be easily appreciated that, according to types of portable terminal, the portable terminal can be implemented in such a way to remove a particular block or to replace the block with other blocks.

As described above, the method and apparatus for managing RO of contents according to the present invention can provide a temporary RO (Temp_RO) for a network-based particular event and can more efficiently control an RO for various contents (for example, network-based game contents, etc.) required to share a particular event.

According to the present invention, the master device having the formal RO for network-based contents provide a virtual space and the slave device, receiving a Temp_RO from the master device or the RI server, can join the virtual space using the Temp_RO.

After the use of the network-based contents is completed, the slave device can automatically terminate the issued temporary RO (Temp_RO) without communicating with an additional DRM manager (an RI server, a master device, etc.). Therefore, the RO for the network-based contents can be efficiently controlled. This RO can be implemented in such a way as to take part in the operation only while the RI initially permits the RO and not to take part in the operation after that, so that hacking, etc., which may occur during the inter-communication, can be prevented at the initial stage of the operation.

A particular device provides a network-based event (individual broadcast) to a network. The device or the RI provides the RO to only a user who requests to join a corresponding event and automatically terminates the provided temporary RO (Temp_RO) once the user has completed the event.

According to the present invention, the method and apparatus can provide contents services, such as network games, etc., using an Ad-Hoc between local users, without connecting to a particular server. In addition, as particular restrictions with respect to the temporary RO (Temp_RO) (for example, the number of persons, use frequency) are added to the rights of a master user and then managed, it is possible to share only one RO allocated to one content with the other users, so that RO for protecting the copy rights can be efficiently managed.

According to the present invention, local connection can be permitted between devices that support Bluetooth, Zigbee, etc. Network-based contents according to the management of the RO can be shared and performed between locally connected respective devices, thereby simply and conveniently providing network-based contents services.

Although exemplary embodiments of the present invention have been described in detail hereinabove, it should be understood that many variations and modifications of the basic inventive concept herein described, which may be apparent to those skilled in the art, will still fall within the spirit and scope of the exemplary embodiments of the present invention as defined in the appended claims.

## Claims

1. A method for managing a rights object (RO) of network-based contents, comprising:
receiving, by a master device, an acceptance message corresponding to an event invitation message from at least one slave device;
requesting, by the master device, authentication for performing an event, together with the slave device, from a rights issuer (RI);
transmitting a temporary RO for authenticating the event performance from the RI to the slave device;
performing the event in the slave device and the master device, according to the temporary RO; and
terminating, by the slave device, the temporary RO when the event has been completely performed.

2. The method of claim 1, further comprising:
generating, by the master device, a group with respect to at least one slave device joining the event, according to the acceptance message; and
transmitting information about the generated group from the master device to the RI.

3. The method of claim 2, further comprising:
issuing, by the RI, the temporary RO to a slave device in the group information; and
receiving, by the slave device in the group information, the temporary RO and storing it.

4. The method of claim 2, further comprising:
counting, by the master device, the RO according to the event performance.

5. The method of claim 3, further comprising:
terminating, by a slave device that does not join the event, the temporary RO transmitted form the RI.

6. The method of claim 2, further comprising:
transmitting the event invitation message from the master device to a slave device or to a particular slave device designated by a user, according to a type of transmission of an invitation message.

7. The method of claim 2, wherein the event is one of network game contents, ad-hoc network game contents, live broadcasting contents, etc., which are based on a network.

8. The method of claim 1, further comprising:
transmitting an event invitation message in response to an event performance request from the master device to at least one slave device;
generating, by the master device, a group to perform the event and an event room, according to an acceptance message that is received in response to the event invitation;
transmitting a message for requesting the opening of the event room from the master device to the RI;
performing, by the master device, an event according to the temporary RO for the event, together with at least one slave device joining the event room; and
counting, by the master device, an RO according to the event performance when the event has been completely performed.

9. The method of claim 8, wherein the event room open request message comprises type information showing a type of request message, contents identifier showing contents information corresponding to the event, information about the master device, and information about at least one slave device joining the event.

10. The method of claim 8, further comprising:
transmitting an event acceptance message corresponding to the event invitation message from the slave device to the master device, and waiting, by the slave device, to join the event;
receiving, by the slave device, a temporary RO for joining the event and storing it;
joining, by the slave device, the event according to the temporary RO, according to the temporary RO, and performing, by the slave device, a corresponding event, together with the master device and at least one of the other devices; and
terminating, by the slave device, the temporary RO for the event when the event has been completely performed.

11. The method of claim 10, further comprising:
receiving, by the slave device, the temporary RO from one of the RI and the master device.

12. The method of claim 10, further comprising:
receiving, by the slave device, a control signal for terminating the temporary RO from the master device; and
terminating, by the slave device, the temporary RO according to the control signal.

13. A system for managing rights object of contents based on a network, comprising:
a master device; and
at least one second slave device,
wherein:
the master device transmits an event invitation message to at least one slave device and counts an RO according as a temporary rights object (RO) is transmitted to the at least one second slave device that transmits an event acceptance message and according as an event is performed; and
the at least one second slave device transmits an event acceptance message in response to the event invitation message, joins the event of the master device according to the temporary RO to perform a corresponding event, and terminates the temporary RO when the event has been completely performed.

14. The system of claim 13, wherein:
the second slave device is one of the at least one slave device, which transmits an event join acceptance message to the master device; and
a slave device, which is one of the second slave devices and does not join the event of the master device, terminates the received temporary RO.

15. The system of claim 14, wherein:
the second slave device receives and stores the temporary RO; and
the master device controls the expiration of the temporary RO with the slave device, which is one of the second slave device and does not join the event, and with the second slave device when the event has been completely performed.
